(19) Europäisches Patentamt
European Patent Office
Office européen des brevets

(11) Publication number: 0 373 402 A2

# (12) EUROPEAN PATENT APPLICATION

(21) Application number: 89121690.5

(22) Date of filing: 24.11.89

(51) Int. Cl.5: C08J 9/14, C08J 9/18, //C08L79:08

(30) Priority: 15.12.88 US 284499

(43) Date of publication of application: 20.06.90 Bulletin 90/25

(84) Designated Contracting States: DE FR GB IT NL

(71) Applicant: GENERAL ELECTRIC COMPANY
1 River Road
Schenectady New York 12305(US)

(72) Inventor: Allen, Richard Brian
Route 49, Yokun Road
Pittsfield Massachusetts 01201(US)
Inventor: Miller, David Smith
57 Hudson Avenue
Chatham New York 12037(US)

(74) Representative: Catherine, Alain
General Electric France Service de Propriété Industrielle 18 Rue Horace Vernet
F-92136 Issy-Les-Moulineaux Cedex(FR)

## (54) Expandable polyetherimide resins.

(57) Expandable thermoplastic polyetherimide resin compositions include resin and dissolved oxygen-containing hydrocarbon blowing agent. The inventive compositions may be provided in the form of pellets which are used in thermoforming processes to produce lightweight, high strength materials.

EP 0 373 402 A2

## EXPANDABLE POLYETHERIMIDE RESINS

### Background of the Invention

The present invention relates to thermoplastic polymer compositions which possess highly desirable physical and chemical properties, such as excellent thermal stability and resistivity and excellent chemical resistance, and which are expandable into low density materials possessing these same desirable properties.

Because of their light weight, durability and strength, engineering thermoplastics are widely used. One class of engineering thermoplastics are the polyetherimides to which the present invention is directed.

Polyetherimides are sold by the General Electric Company under the trademark Ultem®. One such product of the General Electric Company, Ultem®-1000, is a polyetherimide resin derived from bisphenol A dianhydride and m-phenylene diamine. Polyetherimide resins are well known in the art and are of considerable commercial value for use in molding compositions because of their excellent physical, chemical and thermal properties. The high glass transition and heat deflection temperatures exhibited by these polymers permit their use in high performance applications. The Ultem®-1000 product mentioned above, for example, finds applications in the automotive, aerospace and electrical industries.

Expanded polymer compositions also are well known. The term "expanded", as used herein, refers to polymer compositions having a substantial amount of air or other gas entrained therein so as to provide a polymer composition of reduced bulk density. Density of expanded compositions preferably is reduced by at least about fifty percent as compared to their non-expanded counterparts.

Expanded polymer compositions often, but not necessarily, are cellular in structure. Expanded polymer compositions are useful in applications requiring energy absorption, sound insulation and heat insulation. Expanded polystyrene (EPS) is a well-known example of an expanded polymer composition. Unfortunately, the physical and chemical properties of polystyrene do not nearly approach those of the engineering thermoplastics in general, and polyetherimides in particular.

U.S. Patent No. 4,727,093 (Allen et al., February 23, 1988, assigned to the General Electric Company) relates to expanded polymer compositions based on polyphenylene ether resins and resin blends of polyphenylene ether and polystyrene. These polymer compositions have lower heat resistances (i.e., lower glass transition temperatures ($T_g$)) than the present polyetherimides and, consequently, can employ conventional blowing agents such as the halogenated hydrocarbons.

### Summary of the Invention

In accordance with one aspect of the present invention, expandable polyetherimide resin compositions contain an effective amount of a blowing agent incorporated in a polyetherimide resin. The blowing agent preferably is an oxygen-containing hydrocarbon compound which has a boiling point below the glass transition temperature of the resin / blowing agent mixture (hereinafter "the imbibed resin"). The blowing agent should be relatively soluble in the polyetherimide resin well below the glass transition temperature ($T_g$) of the imbibed resin (e.g. at room temperature of about 20° C), yet relatively insoluble at the $T_g$ of the imbibed resin. Examples of blowing agents for the present resins include esters, especially lower alkyl esters such as ethyl acetate, methyl acetate and isopropyl acetate, and halogenated counterparts of the same, as well as ketones, especially lower alkyl ketones such as acetone and methyl ethyl ketone as well as cyclohexanone, and halogenated counterparts of the same. By "relatively soluble" we mean that the blowing agent is sufficiently soluble in the resin to provide an imbibed resin having dissolved therein a sufficient, effective amount of the blowing agent. By "relatively insoluble" we mean that a sufficient, effective amount of the blowing agent comes out of solution to expand the resin. Thus, the blowing agent can be dissolved into the polyetherimide resin to produce a storage-stable imbibed resin product. The blowing agent comes out of solution to blow the resin when the imbibed resin product is heated to its $T_g$ during a subsequent expanding step. The amount of blowing agent dissolved in the resin should be sufficient and effective to produce expansion (blowing) of the composition during the subsequent expanding step. The inventive expandable resin compositions may be provided in the form of pellets or particles which are conveniently expanded and concurrently molded into a variety of useful articles.

In another aspect, the present invention encompasses methods of producing expandable polyetherimide resin compositions including the step of incorporating a blowing agent into the resin, wherein the blowing agent is an oxygen-containing hydrocarbon compound, and preferably a ketone, which has a boiling point

below the $T_g$ of the imbibed resin. The blowing agent should be soluble in the resin at room temperature as well as at the processing temperature of the incorporation step and should thereafter come out of solution during an expanding step conducted at or nearly at the glass transition temperature of the imbibed polyetherimide resin. In one such method, the blowing agent is incorporated into the resin by exposing the resin to a saturated atmosphere of the blowing agent at a temperature below the glass transition temperature of the resin (yet at which the blowing agent will dissolve into the resin) and at elevated pressure. In another such method, the resin is suspended in a mixture of blowing agent and inert carrier fluid at an elevated temperature but, again, at a temperature at which the blowing agent is sufficiently soluble in the resin.

Reference is made throughout to the glass transition temperature of the polyetherimide resin / blowing agent mixture (i.e. "the imbibed resin"); this is because the addition of blowing agent changes (depresses) the $T_g$ of the resin.

The present invention provides compositions possessing the beneficial properties of polyetherimide resins, including high heat resistance, with the added advantage that they are expandable into low density, cellular materials which retain these beneficial properties. The expanded resin products are useful in the electronics and aerospace industries as well as in consumer goods such as microwave oven cookware.

## Detailed Description of the Invention

The polyetherimides employed in the polymer resin compositions of this invention are well-known injection moldable engineering thermoplastics. Polyetherimides are characterized by high impact strengths, high temperature resistance and good processibility.

The polyetherimides used for preparing the resins of this invention contain repeating groups of the formula

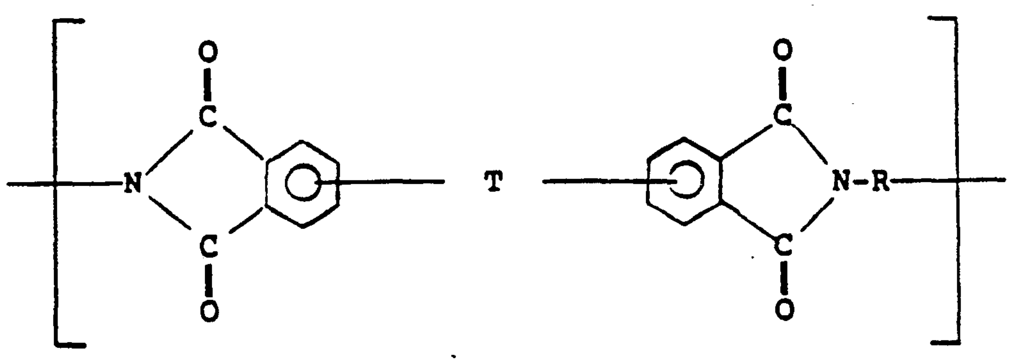

wherein "a" is an integer greater than 1, e.g., from 10 to 10,000 or more; T is -O- or a group of the formula -O-Z-0-

wherein the divalent bonds of the -O- or the -O-Z-0-group are in the 3,3′; 3,4′; 4,3′, or the 4,4′ positions; Z is a member of the class consisting of (A):

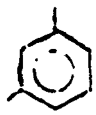 , 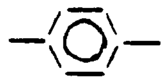 , 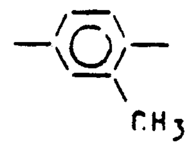 ,

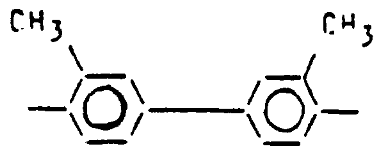 , 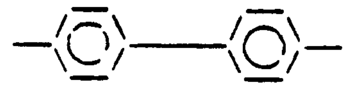

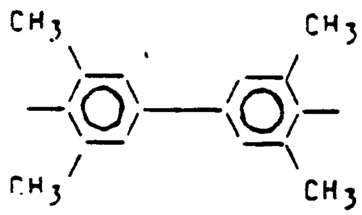 and 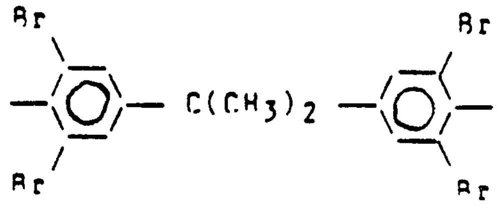

and (B) divalent organic radicals of the general formula

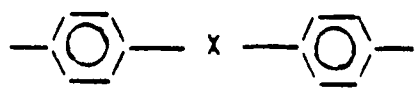

where X is a member selected from the group consisting of divalent radicals of the formulas

$-C_yH_{2y}-$, 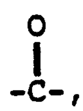, 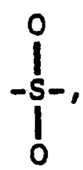, -O- and -S-

where y is an integer from 1 to about 5; and R is a divalent organic radical selected from the group consisting of (a) aromatic hydrocarbon radicals having from 6 to about 20 carbon atoms and halogenated derivatives thereof, (b) alkylene radicals having from 2 to about 20 carbon atoms, cycloalkylene radicals having from 3 to about 20 carbon atoms, and (c) divalent radicals of the general formula

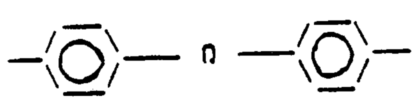

where Q is a member selected from the group consisting of

-S-, -O-, 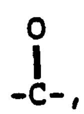, 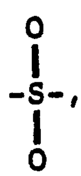, and $-C_xH_{2x}-$,

and x is an integer from 1 to about 5.

In one embodiment, the polyetherimide may be a copolymer which, in addition to the etherimide units described above, further contains polyimide repeating units of the formula

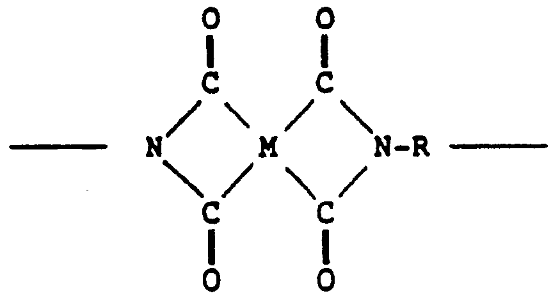

wherein R is as previously defined and M is selected from the group consisting of

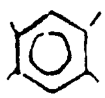 , 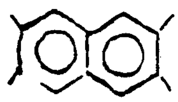 and 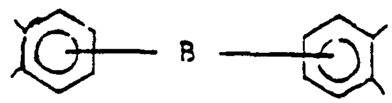

where B is -S- or

- 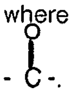 -. These polyetherimide copolymers and their preparation are described by Williams et al. in U.S. Patent 3,983,093, incorporated herein by reference.

The polyetherimides can be prepared by any of the methods well known to those skilled in the art, including the reaction of an aromatic bis(ether anhydride) of the formula

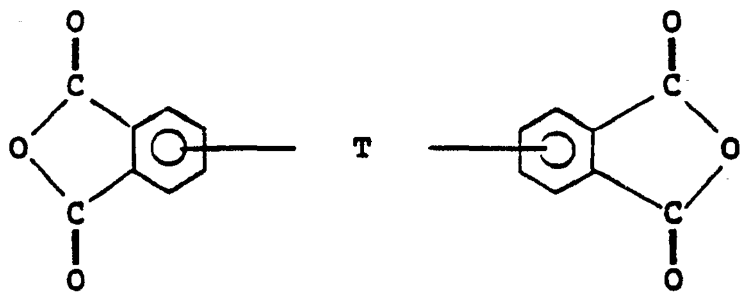

with an organic diamine of the formula

(II) $H_2N-R-NH_2$

wherein T and R are defined as described above.

Bis(ether anhydride)s of formula I include, for example,

1,3-bis(2,3-dicarboxyphenoxy)benzene dianhydride;

1,4-bis(2,3-dicarboxyphenoxy)benzene dianhydride;

1,3-bis(3,4-dicarboxyphenoxy)benzene dianhydride;

1,4-bis(3,4-dicarboxyphenoxy)benzene dianhydride;and 4,4′-bis(phthalic anhydride)ether.

A preferred class of aromatic bis(ether anhydride)s included by formula I includes compounds of formula III, IV and V, which follow:

(III) 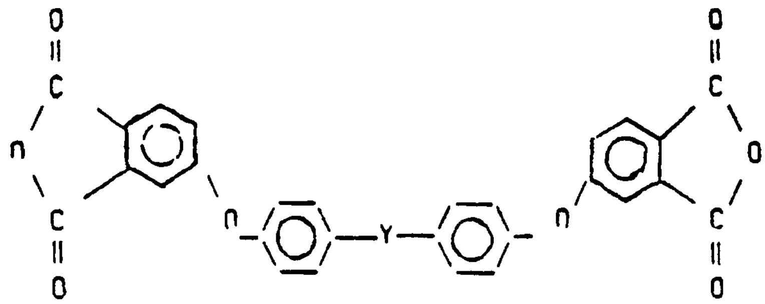

(IV) 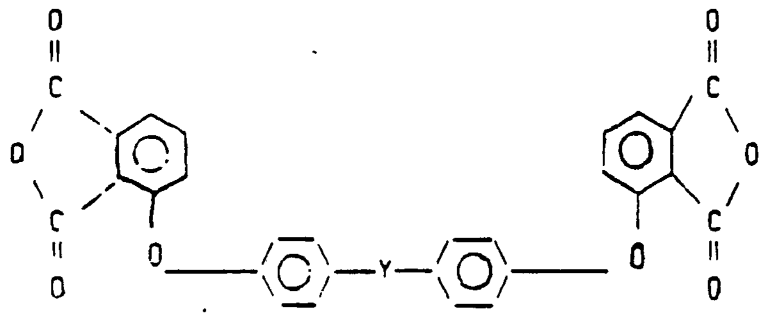

(V) 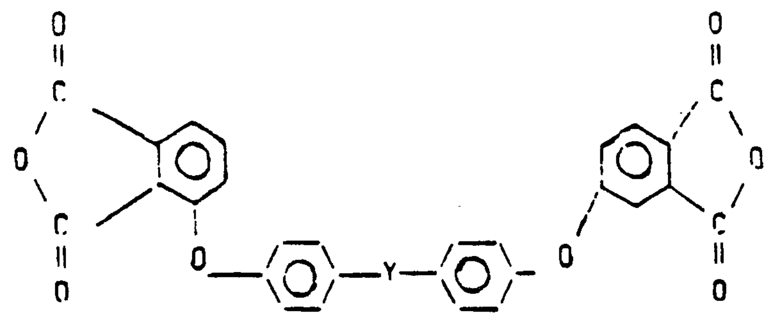

and mixtures thereof, where Y is selected from the group consisting of -O-, -S-,

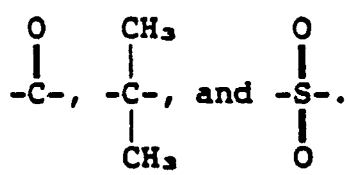

and

Aromatic bis(ether anhydride)s of formula III include, for example:
2,2-bis[4-(3,4-dicarboxyphenoxy)phenyl]propane dianhydride;
4,4′-bis(3,4-dicarboxyphenoxy)diphenyl ether dianhydride;
4,4′-bis(3,4-dicarboxyphenoxy)diphenyl sulfide dianhydride;
4,4′-bis (3,4-dicarboxyphenoxy)benzophenone dianhydride;
4,4′-bis(3,4-dicarboxyphenoxy)diphenyl sulfone dianhydride; and mixtures thereof.

Aromatic bis(ether anhydride)s of formula IV include, for example:
2,2-bis[4-(2,3-dicarboxyphenoxy)phenyl]propane dianhydride;
4,4′,-bis(2,3-dicarboxyphenoxy)diphenyl ether dianhydride;
4,4′-bis(2,3-dicarboxyphenoxy)diphenyl sulfide dianhydride;
4,4′-bis(2,3-dicarboxyphenoxy)benzophenone dianhydride;
4,4′-bis(2,3-dicarboxyphenoxy)diphenyl sulfone dianhydride; and mixtures thereof.

The aromatic bis(ether anhydride)s of formula V may be, for example,
4-(2,3-dicarboxyphenoxy)-4′-(3,4-dicarboxyphenoxy) diphenyl-2,2-propane dianhydride;

4-(2,3-dicarboxyphenoxy)-4′-(3,4-dicarboxyphenoxy) diphenyl ether dianhydride;
4-(2,3-dicarboxyphenoxy)-4′-(3,4-dicarboxyphenoxy) diphenyl sulfide dianhydride;
4-( 2,3-dicarboxyphenoxy)-4′-(3,4-dicarboxyphenoxy) benzophenone dianhydride;
4-(2,3-dicarboxyphenoxy)-4′,-(3,4-dicarboxyphenoxy) diphenyl sulfone dianhydride, and mixtures thereof.

When polyetherimide/polyimide copolymers are employed, a dianhydride, such as pyromellitic anhydride, is used in combination with the bis(ether anhydride).

Some of the aromatic bis(ether anhydride)s of formula (I) are shown in U.S. patent 3,972,902 (Darrell Heath and Joseph Wirth). As described therein, the bis(ether anhydride)s can be prepared by the hydrolysis, followed by dehydration, of the reaction product of a nitrosubstituted phenyl dinitrile with a metal salt of dihydric phenol compound in the presence of a dipolar, aprotic solvent.

Additional aromatic bis(ether anhydride)s also included within formula (I) above are shown by Koton, M.M., Florinski, F.S., Bessonov, M.I. and Rudakov, A.P. (Institute of Heteroorganic Compounds, Academy of Sciences, U.S.S.R), U.S.S.R. patent 257,010, November 11, 1969, Appl. May 3, 1967, and by M.M. Koton, F.S. Florinski, Zh. Org. Khin. 4(5), 774 (1968).

The organic diamines of formula (II) include, for example:
m-phenylenediamine,
p-phenylenediamine,
4,4′ -diaminodiphenylpropane,
4,4′ -diaminodiphenylmethane (commonly named 4,4′ -methylenedianiline),
4,4′-diaminodiphenyl sulfide,
4,4′-diaminodiphenyl sulfone,
4,4′ -diaminodiphenyl ether (commonly named 4,4′-oxydianiline),
1,5-diaminonaphthalene,
3,3-dimethylbenzidine,
3,3-dimethoxybenzidine,
2,4-bis (beta-amino-t-butyl)toluene,
bis (p-beta-amino-t-butylphenyl) ether,
bis(p-beta-methyl-o-aminophenyl)benzene,
1,3-diamino-4-isopropylbenzene,
1,2-bis(3-aminopropoxy)ethane,
benzidine,
m-xylylenediamine,
2,4-diaminotoluene,
2,6-diaminotoluene,
bis(4-aminocyclohexyl)methane,
3-methylheptamethylenediamine,
4,4-dimethylheptamethylenediamine,
2,11-dodecanediamine,
2,2-dimethylpropylenediamine,
octamethylenediamine,
3-methoxyhexamethylenediamine,
2,5-dimethylhexamethylenediamine,
2,5-dimethylheptamethylenediamine,
3-methylheptamethylenediamine,
5-methylnonamethylenediamine,
1,4-cyclohexanediamine,
1,12-octadecanediamine,
bis(3-aminopropyl)sulfide,
N-methyl-bis(3-aminopropyl)amine,
hexamethylenediamine,
heptamethylenediamine,
nonamethylenediamine,
decamethylenediamine, and
mixtures of such diamines.

Preferred polyetherimides are available commercially from General Electric Company, Pittsfield, Massachusetts U.S.A. under the registered trademark ULTEM®. The polyetherimides are available in a variety of physical forms including our preferred pellets of 10 to 30 standard U.S. mesh (A.S.T.M. standard) size.

The blowing agents employed in the present compositions and methods are volatile liquids or gasses

(including mixtures thereof) which have boiling points below the $T_g$ of the resin / blowing agent mixtures. The polyetherimide resins discussed herein typically have a $T_g$ in excess of about 215° C and as high as about 250° C or even higher. These temperatures are $T_g$s for the resins prior to the incorporation of blowing agent; the presence of blowing agent in the compositions tends to depress the $T_g$ of the mixture. The blowing agent should be sufficiently soluble in the polyetherimide resin at the selected processing temperature so that an effective amount of blowing agent can be incorporated. By "effective amount" we mean an amount of blowing agent sufficient to produce expansion of the polymer composition during a subsequent expanding step. Preferably, said amount is effective to produce a polyetherimide composition of at least about fifty percent reduced density following expansion. The blowing agent also should be sufficiently soluble in the resin at room temperature, about 20° C, whereby the imbibed resin product is storage stable. The blowing agent should be relatively insoluble in the polyetherimide resin, however, at the temperatures and pressures attained during expansion of the resin.

Some "conventional" blowing agents such as the halocarbons sold under the Freon trademark, and the hydrocarbons such as pentane and heptane which are commonly used to expand polystyrene, were found unsuitable as blowing agents for polyetherimide resins. The reasons why any particular compound is useful as a blowing agent for one class of polymers but not for another may vary. For example, we believe that the halocarbons may be insufficiently soluble in the polyetherimide resins to function effectively. Oxygen-containing hydrocarbon compounds which are soluble in the resin and are liquid at room temperature, yet become insoluble in the imbibed resin at temperatures approaching the $T_g$ of the particular polyetherimide resin / blowing agent mixture being employed, are preferred as blowing agents in the present invention. Ketones, including halogenated ketones, are preferred among these oxygen-containing hydrocarbon compounds. Acetone, which is not commonly thought of as a blowing agent for polymer compositions, is particularly preferred.

The blowing agent may be dissolved into the polyetherimide resin by exposing the resin to a saturated atmosphere of the blowing agent at a temperature slightly below (e.g. about 20 to 50° C below) the $T_g$ of the resin / blowing agent mixture; such temperature will often be in the range of about 160 to 200° C. This method is especially useful when the resin is in the form of pellets or particles. This method is practiced, for example, by placing polyetherimide resin pellets in an autoclave. The pellets are dispersed on a wire mesh screen within the autoclave in order to expose a maximum surface area to the saturated atmosphere of blowing agent vapors. The autoclave is then sealed and evacuated, following which a quantity of blowing agent is drawn in. The amount of the blowing agent charge is determined by the amount of absorption desired and the amount of blowing agent required to maintain a saturated atmosphere. The autoclave is heated to e.g. 90° C and held at this temperature for about one hour. The temperature is then raised to e.g. 170° C and maintained at this temperature for an extended period of time, e.g. about three and one-half hours. Time and temperature conditions are selected by the artisan based upon the $T_g$ of the particular resin and the rate at which that resin absorbs the blowing agent. The autoclave is allowed to cool and the pellets are removed. The resulting pellets have blowing agent dissolved in the polyetherimide resin and are suitable for further conventional processing into expanded, cellular, low-density products.

Another method for incorporating a blowing agent into polyetherimide resins involves suspending the resin, e.g. in the form of pellets, in a mixture of blowing agent and an inert carrier fluid. An inert carrier fluid in which the blowing agent is substantially insoluble would be preferred. By "inert carrier fluid" we mean a fluid which is substantially insoluble in, and unreactive with, the polyetherimide resin, the blowing agent and any other desired ingredients (such as suspension agents and/or surfactants). Preferred inert carrier fluids are water and mineral oil. While mineral oil advantageously is not a solvent for acetone, the use of water has produced superior results. By way of example, pellets of polyetherimide resin are suspended in an aqueous solution of about one percent by weight polyvinyl alcohol suspension agent. Other useful suspension agents include tricalcium phosphate, polyethylene glycol and various cellulose derivatives. The suspension is charged into an autoclave, whereupon a desired quantity of blowing agent is added. The autoclave is sealed, agitation is initiated (to prevent clumping of the pellets and to improve intimate contact between the pellets and the mixture) and the temperature is slowly increased to a temperature approaching (e.g. about 20 to 50° C below) the $T_g$ of the resin and held there for a period of time. Holding the suspension at slightly below the $T_g$ of the resin promotes absorption of the blowing agent into the resin. Following cooling, the pellets are separated from the mixture, washed with water and allowed to dry. The resulting pellets are useful for further processing into expanded, low density polyetherimide resin products.

Expansion of the expandable imbibed resin compositions of the present invention is accomplished by heating the compositions to a temperature (1) sufficient to cause the dissolved blowing agent to come out of solution and (2) at or slightly in excess of the $T_g$ of the imbibed resin. Pellets of acetone-containing Ultem® polyetherimide resin are optimally expanded at 180° to 190° C over three to four minutes to yield a fine-celled expanded product of about 9 pounds per cubic foot (pcf) bulk density. The use of excessive expansion temperatures can produce expanded products with undesirably large cells or even hollow centers. Highly pressurized steam (e.g. above about 170 psi and preferably about 200 psi) may be used to raise the temperature of the compositions to the desired level during molding operations. The application of microwave energy in order to sufficiently raise the temperature of the imbibed resin also is contemplated.

The following examples serve to illustrate preferred embodiments of the present invention.

### Example 1

75 grams of polyetherimide pellets were added to a 300 milliliter reactor and suspended in 150 grams aqueous 0.8% polyvinyl alcohol solution. The suspension was charged with 7.73 grams of acetone and the temperature was increased to 95° C and held for one hour. The temperature was then increased to 190° C for four hours which generated 200 psi pressure within the reactor. The pellets were cooled to room temperature, separated from the PVA solution and washed with water. The resultant pellets had one percent acetone absorbed into them. Expansion of the resultant pellets was carried out in a 210° C oven for four minutes giving an expanded thermoplastic product having a bulk density of 9.74 lb./cu.ft.

### Example 2

The procedure from Example 1 was repeated only using smaller pellets and increasing the amount of acetone used to 33.4 grams. The upper operating temperature was also decreased to 170° C for 2.5 hours. The resultant pellets had 7.45% acetone absorbed into them. These pellets were expanded in a 180° C over for four minutes resulting in a bulk density of 9 lb./cu.ft.

### Example 3

An expanded thermoplastic composition was produced by charging a 22 milliliter pressure reactor with 2.52 grams of polyetherimide resin (Ultem® 1000) and 1.22 grams of acetone. The reactor was placed in a 180° C oven for four hours after which the pressure was immediately released and the reactor quenched to prevent collapsing of the foam. The resultant material had a bulk density of 7 lb./cu.ft.

Although the present invention has been described in connection with certain preferred embodiments, it is not so limited. The preceding discussion will provide guidance to those skilled in the art to select other specific blowing agents and resins, and to select other suitable process parameters, which fall within the scope of the following claims.

## Claims

1. An expandable thermoplastic polyetherimide resin composition comprising an effective amount of a blowing agent incorporated in a polyetherimide resin, wherein the blowing agent is an oxygen-containing hydrocarbon which is relatively soluble in the resin at room temperature and relatively insoluble in the resin at the glass transition temperature of the resin, and said amount is effective to produce expansion of the resin composition in a subsequent expanding step.

2. A composition of claim 1 wherein the polyetherimide contains repeating units of the formula

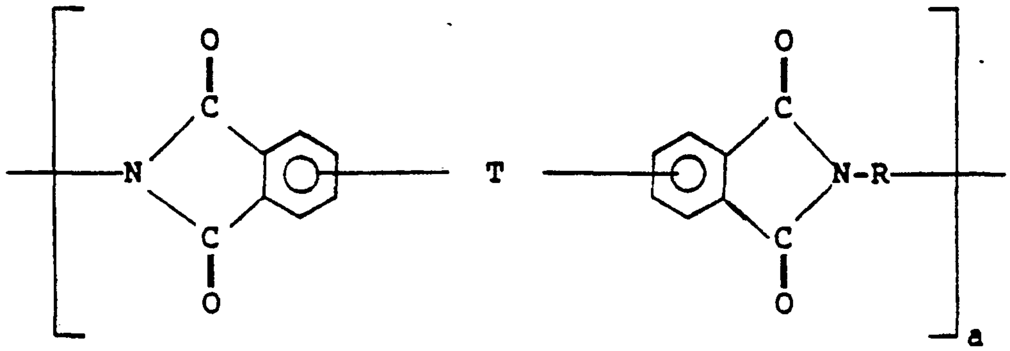

where T is -O- or a group of the formula

-O-Z-0-

wherein the divalent bonds of the -O- or the -O-Z-0-group are in the 3,3′, 3,4′, 4,3′ or 4,4′ positions; Z is a member of the class consisting of (A)

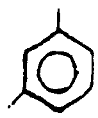 , 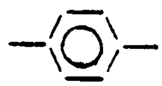 , 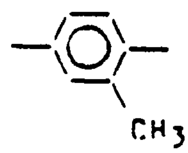 ,

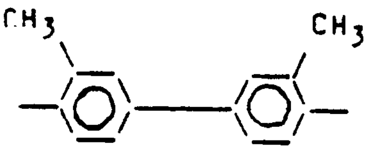 , 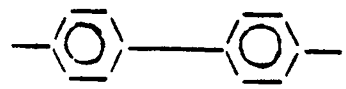

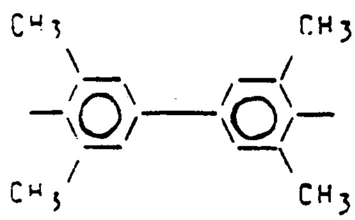 and 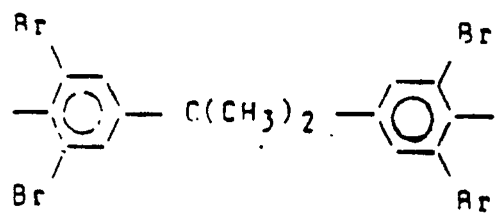

and (B) divalent organic radicals of the general formula

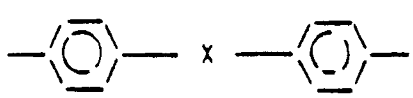

where X is member selected from the group consisting of divalent radicals of the formulas

$- C_yH_{2y}-$, 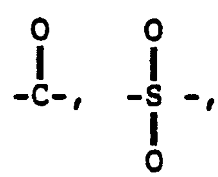 , -O- and -S-

where y is an integer from 1 to about 5; and R is a divalent organic radical selected from the group consisting of (a) aromatic hydrocarbon radicals having from 6 to about 20 carbon atoms and halogenated derivatives thereof, (b) alkylene radicals have from 2 to about 20 carbon atoms, cycloalkylene radicals

having from 3 to about 20 carbon atoms, and (c) divalent radicals of the general formula

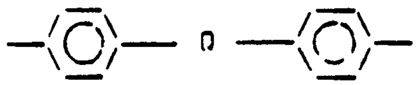

where Q is a member selected from the group consisting of

$-S-$, $-O-$, 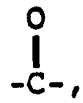, 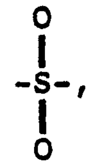, and $-C_xH_{2x}-$,

and x is an integer from 1 to about 5.

3. A composition of claim 2, wherein the polyetherimide further contains repeating units of the formula

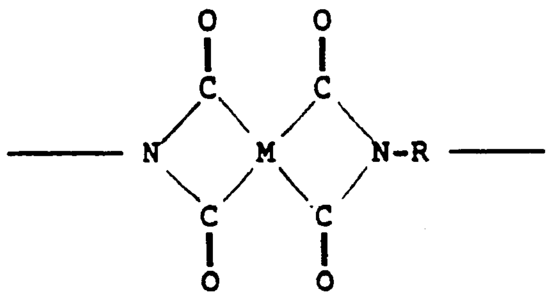

where R is as defined in claim 2 and M is selected from the group consisting of

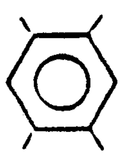 , 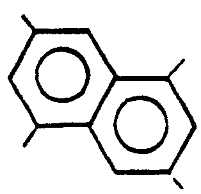 and 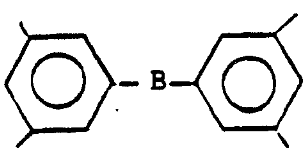

where B is -S- or

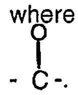.

4. A composition of claim 1 wherein said effective amount is an amount sufficient to produce an expanded polyetherimide resin composition of at least about fifty percent reduced bulk density.

5. A composition of claim 1 comprising, by weight, about 0.5 to about 20 % of blowing agent.

6. A composition of claim 4 wherein the blowing agent comprises a ketone or a halogenated ketone.

7. A composition of claim 4 wherein the blowing agent comprises acetone.

8. A composition of claim 4 wherein the blowing agent consists essentially of acetone.

9. A composition of claim 4 wherein the blowing agent comprises an ester.

10. A composition of claim 4 wherein the blowing agent comprises a lower alkyl ester.

11. A composition of claim 10 wherein the lower alkyl ester is a member of the group consisting of ethyl acetate, methyl acetate, isopropyl acetate and halogenated counterparts of the same.

12. A composition of claim 8 comprising, by weight, about 0.5 to about 20 % of acetone.

13. A composition of claim 1 wherein the polyetherimide contains repeating units of the formula

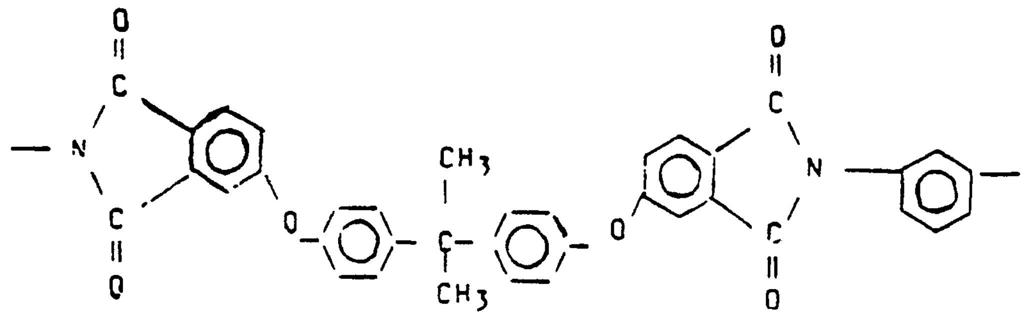

and repeating units of the formula

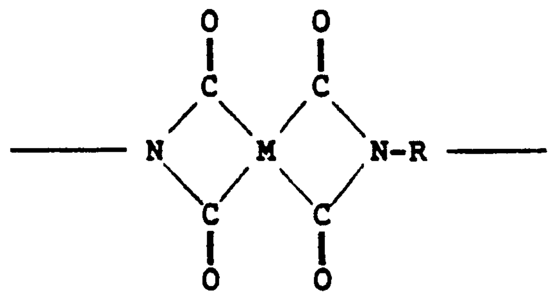

where R, M and N are as defined in claim 3.

14. A composition of claim 13 comprising, by weight, about 0.5 to about 20 % of blowing agent.
15. A composition of claim 14 wherein the blowing agent comprises acetone.
16. A composition of claim 14 wherein the blowing agent consists essentially of acetone.
17. A composition of claim 13 comprising, by weight, about 2 to about 15 % of blowing agent.
18. A composition of claim 17 wherein the blowing agent comprises acetone.
19. A composition of claim 17 wherein the blowing agent consists essentially of acetone.
20. A composition of claim 1 wherein the blowing agent is substantially insoluble in water.
21. An expandable resin composition of claim 1 in the form of pellets.
22. An expandable resin composition of claim 19 in the form of pellets.
23. A composition of claim 22 wherein the pellets are of about 10 to about 30 U.S. standard mesh size.
24. A process for producing an expandable thermoplastic polyetherimide resin composition, comprising, incorporating a blowing agent into a thermoplastic polyetherimide resin, wherein the blowing agent is an oxygen-containing hydrocarbon which is relatively soluble at room temperature in the polyetherimide resin and is relatively insoluble in the resin at the glass transition temperature of the resin.
25. A process of claim 24 wherein the thermoplastic polyetherimide contains repeating units of the formula

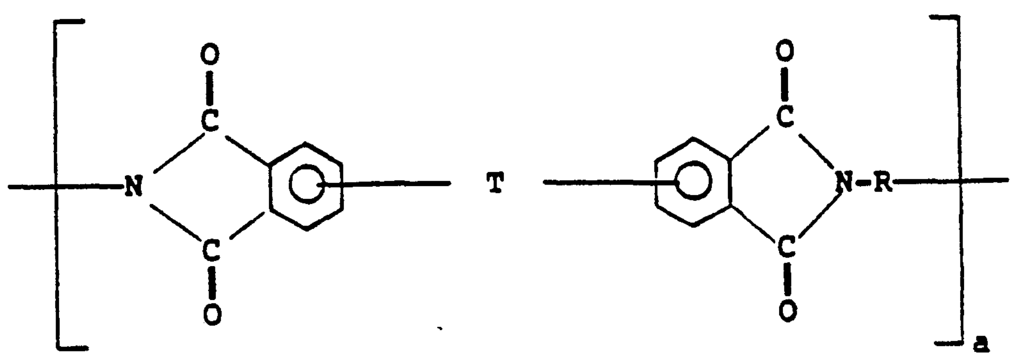

where T is -O- or a group of the formula
-O-Z-O-
wherein the divalent bonds of the -O- or the -O-Z-0-group are in the 3,3', 3,4', 4,3' or 4,4' positions; Z is a

member of the class consisting of (A)

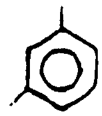 , 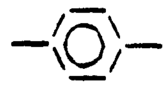 , 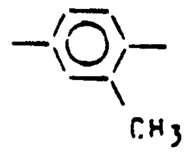 ,

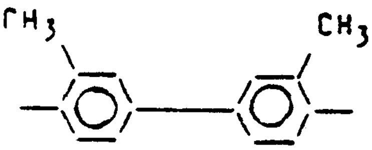 , 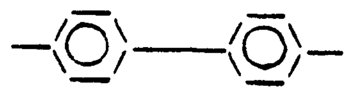

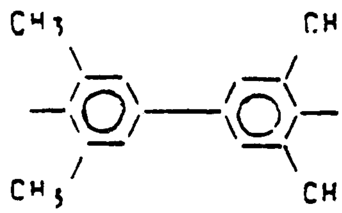 and 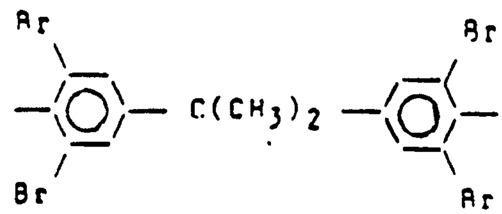

and (B) divalent organic radicals of the general formula

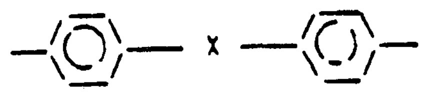

where X is member selected from the group consisting of divalent radicals of the formulas

$-C_yH_{2y}-$, 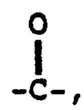, 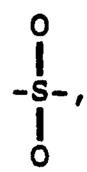, -O- and -S-

where y is an integer from 1 to about 5; and R is a divalent organic radical selected from the group consisting of (a) aromatic hydrocarbon radicals having from 6 to about 20 carbon atoms and halogenated derivatives thereof, (b) alkylene radicals have from 2 to about 20 carbon atoms, cycloalkylene radicals having from 3 to about 20 carbon atoms, and (c) divalent radicals of the general formula

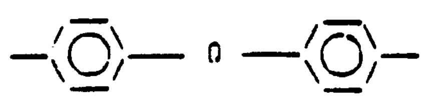

where Q is a member selected from the group consisting of

-S-, -O-, 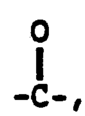, 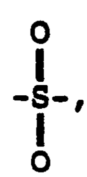, and $-C_xH_{2x}-$,

and x is an integer from 1 to about 5.

26. A process of claim 25 wherein the blowing agent comprises acetone.

27. A process of claim 25 wherein the blowing agent consists essentially of acetone.

28. A process of claim 26 wherein the thermoplastic polyetherimide also contains repeating units of the formula

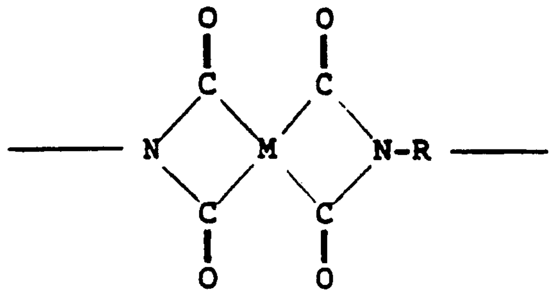

where R is as defined in claim 21 and M is selected from the group consisting of

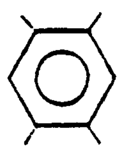
,
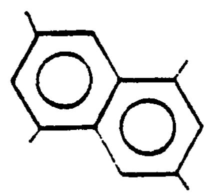
and
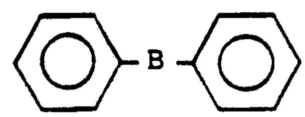

where B is -S- or

$-\overset{\text{O}}{\overset{\|}{\text{C}}}-$.

29. A process of claim 24 comprising: providing a thermoplastic polyetherimide resin; and contacting the resin with the blowing agent to dissolve the blowing agent into the resin.

30. A process of claim 29 wherein said contacting step is conducted at elevated temperature and pressure.

31. A process of claim 30 conducted below the glass transition temperature of the thermoplastic polyetherimide resin.

32. A process of claim 30 conducted at a temperature of about 160 to about 200 °C.

33. A process of claim 24 wherein said incorporating step is accomplished by suspending a thermoplastic polyetherimide resin in a mixture of blowing agent and inert carrier fluid at a temperature below the glass transition temperature of the thermoplastic polyetherimide resin.

34. A process of claim 33 wherein said resin contains repeating units of the formula

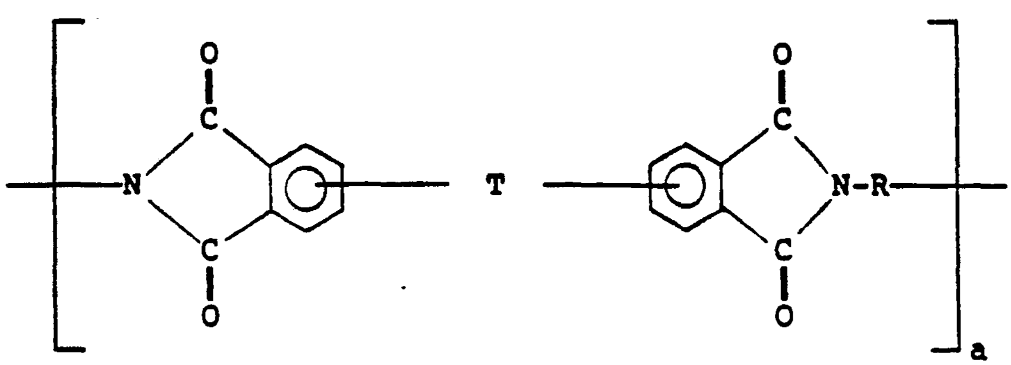

where T is -O- or a group of the formula

-O-Z-0-

wherein the divalent bonds of the -O- or the -O-Z-0-group are in the 3,3′, 3,4′, 4,3′ or 4,4′ positions; Z is a member of the class consisting of (A)

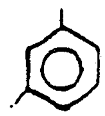 , 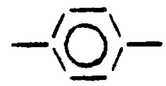 , 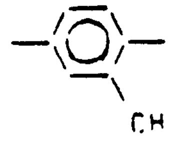 ,

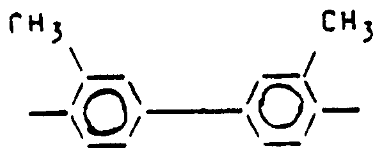 , 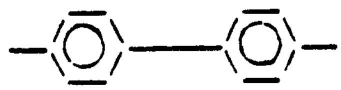

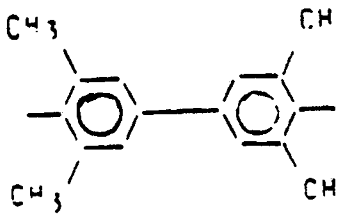 and 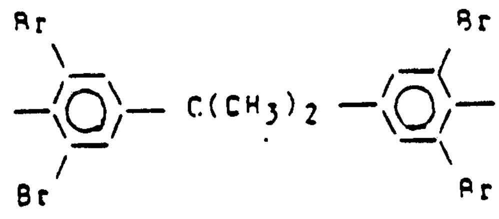

and (B) divalent organic radicals of the general formula

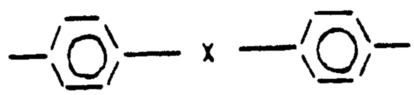

where X is member selected from the group consisting of divalent radicals of the formulas

$-C_yH_{2y}-$, 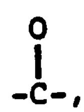, 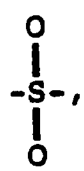, $-O-$ and $-S-$

where y is an integer from 1 to about 5; and R is a divalent organic radical selected from the group consisting of (a) aromatic hydrocarbon radicals having from 6 to about 20 carbon atoms and halogenated derivatives thereof, (b) alkylene radicals have from 2 to about 20 carbon atoms, cycloalkylene radicals having from 3 to about 20 carbon atoms, and (c) divalent radicals of the general formula

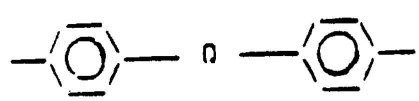

where Q is a member selected from the group consisting of

$-S-$, $-O-$, 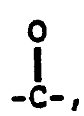, 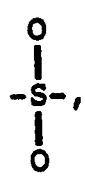, and $-C_xH_{2x}-$,

and x is an integer from 1 to about 5.

35. A process of claim 34 wherein the resin also contains repeating units of the formula

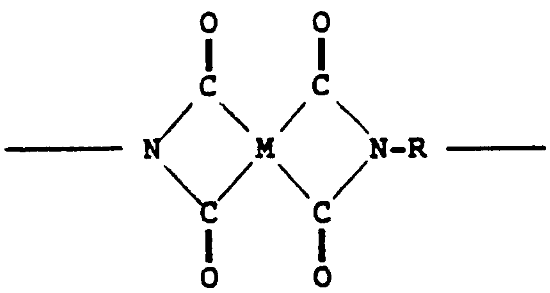

where R is as defined in claim 31 and M is selected from sthe group consisting of

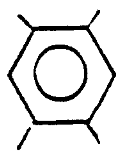 , 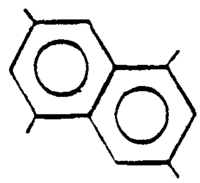 and 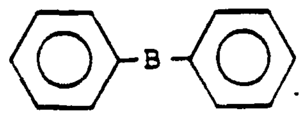 .

where B is -S- or

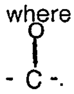

36. A process of claim 33 wherein the blowing agent comprises a ketone or a halogenated ketone.

37. A process of claim 33 wherein the blowing agent comprises acetone.

38. A process of claim 33 wherein the blowing agent consists essentially of acetone.

39. A process of claim 33 wherein the inert carrier fluid comprises water and the blowing agent comprises acetone.

40. A process of claim 33 wherein the inert carrier fluid comprises mineral oil.

41. A process of claim 39 wherein the inert carrier fluid further comprises a suspension agent and/or a surfactant.

42. A process of claim 41 wherein the suspension agent comprises one or more of polyvinyl alcohol, polyethylene glycol and cellulose derivative.

43. A process of claim 33 further comprising the step of agitating the resin in the mixture.

44. A process of claim 33 wherein the blowing agent comprises an ester.

45. A process of claim 33 wherein the blowing agent comprises a lower alkyl ester.

46. A process of claim 33 wherein the blowing agent comprises a member of the group consisting of ethyl acetate, methyl acetate, isopropyl acetate and halogenated counterparts thereof.

47. A process of claim 33 wherein the blowing agent comprises methyl ethyl ketone.

48. A process of claim 33 wherein the blowing agent comprises cyclohexanone.